(19) **Europäisches Patentamt / European Patent Office / Office européen des brevets**

(11) **EP 1 912 176 B1**

(12) **EUROPEAN PATENT SPECIFICATION**

(45) Date of publication and mention
of the grant of the patent:
**07.01.2009 Bulletin 2009/02**

(51) Int Cl.:
***G06T 17/50*** *(2006.01)*

(21) Application number: **06021156.2**

(22) Date of filing: **09.10.2006**

(54) **Realistic height representation of streets in digital maps**

Wirklichkeitsnahe Höhendarstellung von Straßen in digitalen Karten

Représentation en hauteur réaliste de rues dans des cartes numériques

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.04.2008 Bulletin 2008/16**

(73) Proprietor: **Harman Becker Automotive Systems GmbH**
**76307 Karlsbad (DE)**

(72) Inventors:
• **Strassenburg-Kleciak, Marek**
**20535 Hamburg (DE)**
• **Meyer, Hendrik**
**22307 Hamburg (DE)**
• **Neumann, Lars**
**22307 Hamburg (DE)**

(74) Representative: **Grünecker, Kinkeldey, Stockmair & Schwanhäusser**
**Anwaltssozietät**
**Leopoldstrasse 4**
**80802 München (DE)**

(56) References cited:
**WO-A-02/16874**  **WO-A1-03/095944**
**US-B1- 6 856 897**

• **LI J ET AL: "Accuracy and reliability of map-matched GPS coordinates: the dependence on terrain model resolution and interpolation algorithm" COMPUTERS AND GEOSCIENCES, PERGAMON PRESS, OXFORD, GB, vol. 31, no. 2, March 2005 (2005-03), pages 241-251, XP004721262 ISSN: 0098-3004**
• **KIM E ET AL: "Improving the computational efficiency of highway alignment optimization models through a stepwise genetic algorithms approach" TRANSPORTATION RESEARCH PART B. METHODOLOGICAL, OXFORD, GB, vol. 39, no. 4, May 2005 (2005-05), pages 339-360, XP004650355 ISSN: 0191-2615**
• **MANDOW L ET AL: "Sindi: an intelligent assistant for highway design" EXPERT SYSTEMS WITH APPLICATIONS, OXFORD, GB, vol. 27, no. 4, November 2004 (2004-11), pages 635-644, XP004564241 ISSN: 0957-4174**

**Description**

**Field of Invention**

The present invention relates to digital maps representing towns and landscapes and, in particular, it relates to the three-dimensional representation of streets in digital maps, e.g., digital city maps and digital road maps.

**Background of the Invention**

Digital maps as, e.g., city maps and road maps became increasingly prevalent in recent years. They represent important building blocks in, e.g., handheld and vehicle navigation systems. The electronic maps may represent cartographic features, as streets, buildings and rivers, and make use of a storage medium, e.g., a compact disk or a digital video disc, to store the data that relates to the cartographic features.

A paper by Jing Li, George Taylor and David B. Kidner, "Accuracy and reliability of map-matched GPS coordinates: the dependence on terrain model resolution and interpolation algodthrn", Computers & Geosciences 31 (2005); pages 241 - 251, describes the use of map matching and height aiding by utilizing a digital terrain model and spatial interpolation of elevation data.

Recently, various navigation systems have been developed that have provided algorithms for transforming data from a digital database into a local three-dimensional perspective view which, in principle, is much more easily understood by many drivers. Elaborated systems, e.g., allow for displaying the intersection approached by the vehicle at variable angles relative to the road depending on the complexity of the intersection.

However, due to the available officially provided digitalization of street maps, present digital maps include entire street networks in a substantially two-dimensional representation only. In such maps height information of streets is only given as information on the relative height of a particular street with respect to crossing street vectors in order to allow for a representation in the appropriate order with respect to the spatial depth.

No data on the topographical height of the street vectors of the digital representation of streets included in present day digital maps are available. Such data would, however, be helpful for a realistic representation of streets, in particular, in the context of digital maps that are stored in map databases of vehicle navigation systems and used for route guidance.

Thus, there is a need for the generation and implementation of street heights in digital street maps in order to provide the users with a more detailed and reliable map information and to facilitate route guidance by means of a navigation system that is configured to display digital maps.

It is therefore an object underlying the present invention to provide a method for including height information in streets of digital maps and to provide digital maps that indicate absolute street heights (not only relative heights of one street (vector) compared with another one).

**Description of the Invention**

The above-mentioned object is obtained by the method for generating street vectors of a street of a digital map (a digital representation of a physical street) according to claim 1, the method comprising the steps of
reading data of a terrain model;
initializing the street vectors with height coordinates read from the data of the terrain model;
calculating a cost function for the initialized street vectors of the street;
minimizing the cost function by varying the height coordinates of at least one street vector; and
determining the street vectors for which the cost function is minimized.

In this application it is assumed that streets in digital maps representing physical streets comprise knots and polygonal elements connecting the knots. The latter are denoted as street vectors herein. Each street vector has a starting point and an end point.

A terrain model is a three-dimensional model, e.g., a digital model obtained by laser-scanning. A great variety of topographic terrain models is provided by official institutions as well as commercial providers. In principle, a digital terrain model is a digital file consisting of terrain elevations for ground positions at regularly or irregularly spaced horizontal intervals. Digital terrain products may be used in the generation of three-dimensional digital maps displaying terrain slope, the direction of slope and terrain profiles between selected points. The terrain model used in the present invention comprises information of the coordinates, in particular the height coordinates, of elements included in the terrain model.

According to the inventive method, street vectors of a street are initially generated (initialized) by means of height coordinate data read from the used terrain model. This implies that the street vectors of a street are conform and plane with the height profile of the corresponding location represented in the terrain model. In particular, there is no difference in the height coordinates of the street vectors and the respective sections of the topographical elements (e.g.,

hills and valleys) in the terrain model. The two-dimensional coordinates of the street in a surface plane, e.g., a projected Cartesian plane, in particular, west-east and north-south coordinates, can be read from already existing two-dimensional map data.

After initialization of the street vectors, i.e. generation of the street vectors with height coordinates corresponding to the terrain model, a cost function for the street vectors is calculated. In particular, a cost function for the entire street built by the street vectors can be calculated. The cost function reflects an estimate of the real costs for constructing a physical street in accordance with the street vectors. The cost function may preferably include estimates for the construction costs for tunnels and/or bridges and/or costs for raising and/or lowering of a street height with respect to the height coordinates used for the initializing of the street vectors (i.e. the height coordinates taken from the terrain model used for initializing the street vectors).

In detail, the cost function may be calculated on the basis of the lengths and depths of tunnels and/or the lengths and heights of bridges and/or the area and/or the volume defined by the difference of the height profile of the street due to the determined street vectors and the corresponding height profile of the terrain model (for the initialized street vectors this difference is zero per definition of the initialization process).

The cost function may preferably take into account information on the geological realities, e.g., the rock or the groundwater table, provided by the terrain model.

It is a main aspect of the present invention to minimize the cost function by varying the height coordinates of the street vectors. First, height coordinates of one or more initialized street vectors are modified. During the minimization process, height coordinates of already modified street vectors may be further modified. Those street vectors are determined for which the costs represented by the cost function are minimized. The thus determined street vectors allow for a representation of a street in a digital map with a previously not available high accuracy in the topographical height. Since the method can be performed fully automatically, accurate three-dimensional street maps can be produced efficiently and economically.

The height coordinates of all crossing points of the street vectors at which street vectors of other streets are crossing may be maintained in the step of minimizing the cost function by variation of the height coordinates of the street vectors. Thereby, it is avoided that by minimizing the cost function for a particular street by varying the height coordinates of the street vectors of this street, street vectors of another street crossing the latter one are modified. It may be preferred, however, to allow for some variation of the crossing points within narrow limits.

According to an embodiment, the herein disclosed method for generating street vectors further comprises

a) calculating the gradients of each of the street vectors;

b) determining whether the calculated gradients lie within predetermined lower and upper limits;

c) modifying height coordinates of the starting and/or the end points of each of the street vectors that has a gradient below the predetermined lower limit or above the predetermined upper limit;

d) calculating the gradients of each of the street vectors with height coordinates modified in step c) and determining whether the calculated gradients lie within predetermined lower and upper limits;

e) performing the above steps c) to d) until the calculated gradients of each of the street vectors lie within the predetermined lower and upper limits; and wherein

the cost function is minimized by varying the height coordinates only of street vectors that have gradients that lie within predetermined the lower and upper limits.

According to another embodiment the herein method for generating street vectors further comprises

a) calculating the overall gradient of a sub-set of the street vectors or the overall gradient of all street vectors of the street;

b) determining whether the calculated overall gradient lies within predetermined lower and upper limits;

c) modifying height coordinates of the starting and/or the end point of at least one street vector of the street vectors for which the overall gradient is calculated, if the calculated overall gradient falls below the predetermined lower limit or exceeds the predetermined upper limit;

d) performing the above steps a) to c) until the overall gradient lies within the predetermined lower and upper limits; and wherein

the cost function is minimized by varying the height coordinates only of street vectors for which the overall gradient lies within the predetermined lower and upper limits.

The sub-set of the street vectors may consist of street vectors between two crossing points. The overall gradient is calculated from the gradients of individual street vectors and represents another more useful measure for estimating a plausible height profile of a street or a street segment.

It is noted that the above-mentioned steps a) - e) of both embodiments including the calculation of gradients can be performed before the minimization of the cost function is performed by varying the initialized street vectors as well as already modified (by modified height coordinates) street vectors.

By determining the gradients (slopes) and varying the starting and/or the end points of each of the street vectors that shows a gradient outside a predetermined range a plausibility check is performed. This is of particular use, if the terrain model shows strong local variations in the topography, e.g., significant discrete jumps in the height (altitude) of adjacent points of a digitized discrete terrain model. The plausibility check is also of importance with respect to urban regions when the sizes of buildings are added to the surface altitude.

The height coordinates of the starting and/or the end points of each of the street vectors having calculated gradients below the predetermined lower limit or above the predetermined upper limit can, in particular, be incremented or decremented by a predetermined value, e.g., one of employed discrete coordinate values.

A street class of the street of a digital map for which street vectors shall be generated in accordance with the present invention may be determined and the above-mentioned lower limit and upper limit can be predetermined on the basis of the determined street class. Typical examples for street classes are main streets, side streets, national highways, country roads etc. For different classes advantageously different lower and upper limits for allowable gradients are chosen. The classes can be determined on the basis of data of a two-dimensional map that is provided and used for the generation of the street vectors (see above).

The determination of the street class may, in particular, comprise determining whether the considered street is constructed in accordance with a clothoid model. Streets constructed according to a clothoid model may be divided into one or more particular classes. Determination of the class a considered street belongs to may be performed on an analysis whether or not the street is constructed according to a clothoid model.

By the term "clothoid model" the parameters of a curve and the unique functional dependence of the parameters of a curve constructed by means of clothoids, i.e. the arc length, the radius, the tangent angle, the clothoid parameter and the curvature, on each other is to be understood. To be more specific, clothoids are geometric curves that represent a sub-class of cycloids and are characterized by a curvature C that is proportional to the arc length L: $C = L / A^2$ where $A$ is commonly referred to as the clothoid parameter I.

Since well-designed and constructed roadways follow the clothoid model, numerical modelling and digital representation of real roads and streets by clothoids allow to obtain reliable and accurate information about the curve parameters as, in particular, curvature of the curves to be passed by the vehicle. In addition, gradients of streets constructed in accordance with a clothoid model are expected to lie within well-defined limits. In Germany, for example, since 1984 main streets and roads are to be designed and constructed by means of clothoids.

The present invention also provides a computer program product, comprising one or more computer readable media having computer-executable instructions for performing the steps of an embodiment of the inventive method as described above.

The above-mentioned object is also achieved by a digital street map comprising streets that is prepared by means of the steps according to one of the above mentioned examples and, thus, comprises
at least one three-dimensional digital representation of a street comprising street vectors; wherein
the street vectors include height coordinates such that a cost function is minimized.

The cost function can be calculated according to one of the above described examples (for details, see also the detailed description of embodiments below). In particular, the cost function can be calculated on the basis of the lengths and depths,of tunnels and/or the lengths and heights of bridges and/or the area and/or the volume defined by the difference of the height profile of the street due to the determined street vectors and the corresponding height profile of a terrain model that has been used for determining initial street vectors that are modified in order to minimize the cost function during the process of generating the street vectors for the digital map claimed in claim 11. Thus, the streets of the digital map (the representations of physical streets) are characterized by the feature of cost minimization.

According to an embodiment of the digital map, each section between two crossing points (at which street vectors of other streets are crossing) of the at least one street has a gradient that lies within predetermined lower and upper limits and/or the entire at least one street has an overall gradient that lies within predetermined lower and upper limits and/or each of the street vectors has a gradient that lies within predetermined lower and upper limits.

Moreover, the above-mentioned predetermined lower and upper limits are determined on the basis of a street class to which the at least one street belongs and/or on the basis of a determination whether the at least one street is constructed according to a clothoid model (see above). Streets constructed in accordance with a clothoid model may represent a street class among others as, e.g., main streets and side streets.

The above-mentioned digital map can be, in particular, a digital street map used for navigation. The digital map may be stored in a map database of a vehicle navigation system. Thus, it is envisaged a navigation system, in particular, a vehicle navigation system, comprising a map database storing a digital map according to one of the above described examples.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates a street profile generated according to an example of the present invention by minimizing a cost function including the costs for tunnels and bridges.

Figure 2 shows a flow chart illustrating inserting a street in a digital map on the basis of a minimized cost function according to an example of the present invention.

Figure 3 shows a flow chart illustrating the determination of street vectors on the basis of a minimized cost function and the calculation of gradients of street vectors according to an example of the present invention.

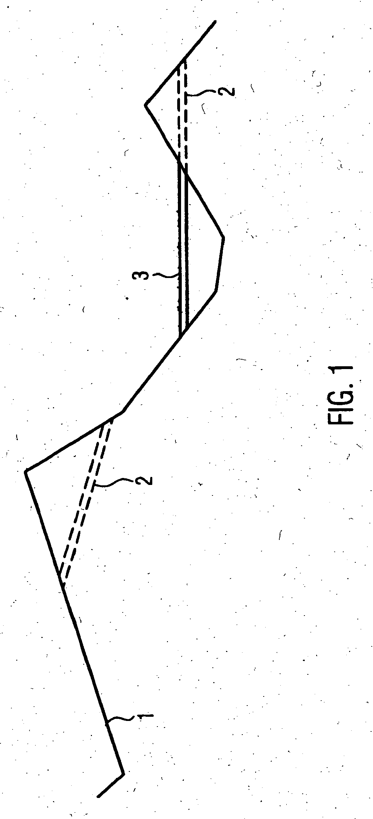

Figure 1 illustrates a street height profile of a street included in a digital map in accordance with an example of the present invention. The street is built by street vectors that form polygons between crossing points (points at which street vectors of different streets are crossing). The solid line 1 represents the street height profile as it is given by initializing the street vectors on the basis of a terrain model (individual street vectors are not distinguished in Figure 1). The data of the terrain model are read and the according height (z-) coordinates are used for the initial street vectors.

The terrain model can be chosen from a variety of digital models offered by official providers. Digital terrain models, e.g., laser-scanned digital terrain models, are provided by local and federal governments as well as, e.g., the U.S. Department of Commerce and corresponding European governmental departments, etc.

The initial street vectors are modified according to the present invention by means of the calculation of a cost function. In the present example the street is located in a mountainous area. Thus, costs for the construction of bridges and tunnels are estimated. The costs are particularly given by lengths and heights of bridges as well as lengths and depths of tunnels. It is expected that the construction of the real road is carried out taking into account the construction costs. Therefore, realistic street height profiles can be obtained by estimating the costs for tunnels and bridges.

In the present example, an overall cost function for all street vectors representing the street section illustrated in Figure 1 is minimized. The overall cost function C may, in par-ticular, include the calculation for the construction costs for N bridges $\sum_{i=1}^{N} B_i$ and M tunnels $\sum_{j=1}^{M} T_j$. Here, it is expected that, in fact, these costs are the relevant ones. Thus, the cost function to be minimized can be calculated as

$$C = \sum_i \left(L_{B,i} + \int (HP_{B,i} - HP_{TM})dxdy\right) + \sum_j \left(L_{T,j} + \int (HP_{T,j} - HP_{TM})dxdy\right)$$

where $L_{B,i}$ and $L_{T,j}$ denote the lengths of the i-th bridge and the j-th tunnel, respectively, and $HP_{B,i}$, $HP_{T,j}$ and $HP_{TM}$ denote the height profile function (z(x, y))of bridges, tunnels and the used terrain model, respectively. The integration is carried out over the surface area with area elements dydy covered by the tunnels and bridges.

In the present example, minimization of C is obtained for street vectors that differ from the terrain model by two tunnels 2 indicated in Figure 1 by dashed double lines and a bridge 3 indicated by a solid double line. The street section included in a digital map, therefore, includes the tunnels 2 and the bridge 3. If, in fact, the real street is mainly constructed on the basis of cost considerations, the digital street given by the street vectors obtained by minimizing the cost function C provides a realistic representation of the height profile of the physical street with a very high accuracy that has been not available in the art.

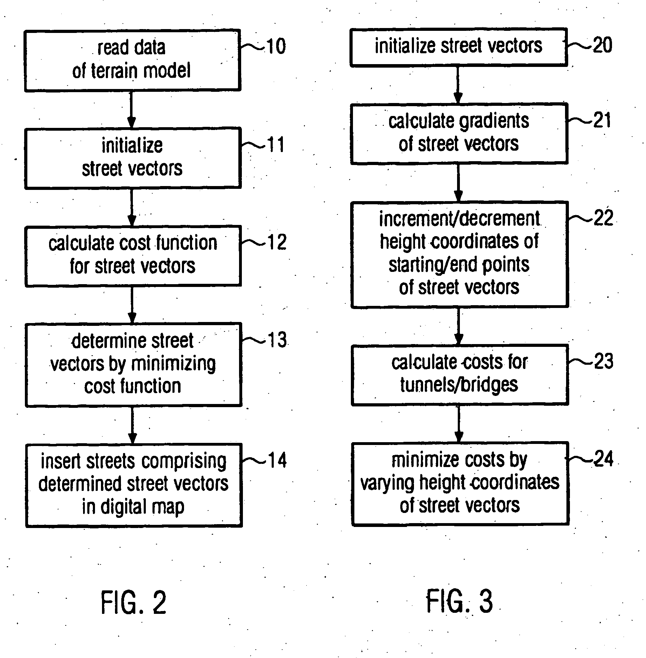

Figure 2 shows a flow chart that illustrates an example of the disclosed method for generating street vectors of a street of a digital map. Data is read from a terrain model 10. The data, in particular, includes height coordinates that are used to initialize street vectors 11 by generating street vectors with height coordinates taken from the terrain model.

A cost function is calculated for the street vectors constituting the desired digital representation of a physical street. Besides information on the construction costs for bridges and tunnels as mentioned above the cost function according to this example includes a contribution given by the distance of a street surface from the surface given by the terrain model $\int (HP_{Street} - HP_{TM})dxdy$, where $HP_{Street}$ denotes the height profile of the street. This contribution estimates the amount of excavated or heaped up earth.

Those street vectors are determined for the street to be included in a digital map for that the cost function is minimized 13. Subsequently, the determined street vectors constituting the desired street are stored and inserted in a digital map in order to allow for the display of a realistic three-dimensional course of the street.

Figure 3 shows a flow chart that illustrates another example of the disclosed method for generating street vectors of a street of a digital map. Based on the data of an available terrain model street vectors are again initialized 20. This implies that the street vectors are conform and plane with the terrain model (without a height difference between the street vectors and the height levels of the terrain model).

Next, the gradients of all street vectors are calculated 21. In this example, it is assumed that individual street vectors are represented by linear functions with the height coordinate $z = s\,x + g$ with a plane coordinate $x$, a slope $s$ and a constant $g$. Calculation of the gradient is performed by determining the slope $s$. The slope can be determined by numerically performed derivation of $z$ with respect to $x$.

For each street vector the determined gradient is compared with predetermined lower and upper limits. These limits are chosen differently for different classes of streets. For example, limits are chosen for classes of main roads, side roads, motorways, etc. Moreover, streets can be divided into those ones that are constructed according to a clothoid model (see discussion above) and those ones that are not constructed in this way.

If the limits for the gradients are not observed by some of the calculated gradients of the street vectors, these street vectors are modified by incrementing or decrementing the values of the height coordinates of the starting points and/or end points of the respective street vectors by some predefined value 22. The value may be given as some percentage of the difference between the value of the height coordinate of the starting point of a street vector that is to be modified and a value of the height coordinate of the end point of this street vector.

After modification of the respective street vectors by incrementing/decrementing the staring/end points the gradient is re-calculated and again it is checked whether or not the gradient exceeds an upper limit or falls below a lower limit. If the value of the gradient still does not lie within a predetermined tolerance, the modification of the starting/end points is iterated until the predetermined limits are observed.

Next, the costs of the entire course of a street given by the street vectors having gradients within the predetermined tolerance are calculated. Calculation of the costs, in particular, includes calculation of the construction costs of tunnels and bridges 23. The costs are minimized by varying the height coordinates of the street vectors 24. Those street vectors are determined to represent a physical street in a digital map for which the overall costs are minimized.

## Claims

1. A method for generating street vectors of a street of a digital map, comprising
   reading data (10) of a terrain model;
   initializing the street vectors (11; 20) with height coordinates included in the read data of the terrain model;
   calculating a cost function (12; 23) for the initialized street vectors of the street;
   minimizing the cost function (13; 24) by varying the height coordinates of at least one street vector; and
   determining the street vectors for which the cost function is minimized.

2. Method according to claim 1, further comprising
   maintaining the height coordinates of all crossing points of the street vectors at which street vectors of other streets are crossing during the step of minimizing the cost function.

3. Method according to claim 1 or 2, further comprising

   a) calculating the gradients (21) of each of the street vectors;
   b) determining whether the calculated gradients lie within predetermined lower and upper limits;
   c) modifying height coordinates of the starting and/or the end points of each of the street vectors that has a gradient below the predetermined lower limit or above the predetermined upper limit;
   d) calculating the gradients of each of the street vectors with height coordinates that are modified in step c) and determining whether the calculated gradients lie within predetermined lower and upper limits;
   e) performing the above steps c) to d) until the calculated gradients of each of the street vectors lie within the predetermined lower and upper limits; and wherein

   the cost function is minimized by varying the height coordinates only of street vectors that have gradients that lie within the predetermined lower and upper limits.

4. Method according to claim 1 or 2, further comprising

   a) calculating the overall gradient of a sub-set of the street vectors or of all street vectors;

b) determining whether the calculated overall gradient lies within predetermined lower and upper limits;

c) modifying height coordinates of the starting and/or the end point of at least one street vector of the street vectors for which the overall gradient is calculated, if the calculated overall gradient falls below the predetermined lower limit or exceeds the predetermined upper limit;

d) performing the above steps a) to c) until the overall gradient lies within the predetermined lower and upper limits; and wherein

the cost function is minimized by varying the height coordinates only of street vectors for which the overall gradient lies within the predetermined lower and upper limits.

5. Method according to claim 3 or 4, wherein the height coordinates of the starting and/or the end points of each of the street vectors having calculated gradients below the predetermined lower limit or above the predetermined upper limit are incremented or decremented by a predetermined value.

6. Method according to one of the claims 3 - 4, wherein a street class of the street is determined and wherein the lower limit and upper limit are predetermined on the basis of the determined street class.

7. Method according to claim 6, wherein step of determining the street class comprises determining whether the street is constructed in accordance with a clothoid model.

8. Method according to one of the preceding claims, wherein the cost function comprises costs for tunnels and/or bridges and/or costs for raising and/or lowering of a street height with respect to the height coordinates used for the initializing of the street vectors.

9. Method according to claim 8, wherein the cost function is calculated on the basis of the lengths and depths of tunnels (2) and/or the lengths and heights of bridges (3) and/or the area and/or the volume defined by the difference of the height profile (1) of the street due to the determined street vectors and the corresponding height profile of the terrain model.

10. Method for preparing a digital map comprising streets constituted by street vectors, the method comprising the steps of the method for generating street vectors according to one of the preceding claims.

11. Computer program product, comprising one or more computer readable media having computer-executable, instructions for performing the steps of the method according to one of the preceding claims.

**Patentansprüche**

1. Ein Verfahren zum Erzeugen von Straßenvektoren einer Straße einer digitalen Karte, das umfasst
Lesen von Daten (10) eines Terrain-Models;
Initialisieren der Straßenvektoren (11; 20) mit Höhenkoordinaten, die in den gelesenen Daten des Terrain-Models enthalten sind;
Berechnen einer Kostenfunktion (12; 23) für die initialisierten Straßenvektoren der Straße;
Minimieren der Kostenfunktion (12; 23) durch Variieren der Höhenkoordinaten von zumindest einem Straßenvektor; und
Bestimmen der Straßenvektoren, für die die Kostenfunktion minimiert wird.

2. Verfahren gemäß Anspruch 1, das weiterhin umfasst
Beibehalten der Höhenkoordinaten sämtlicher Kreuzungspunkte der Straßenvektoren, an den Straßenvektoren anderer Straßen kreuzen, während des Schrittes der Minimierung der Kostenfunktion.

3. Verfahren gemäß Anspruch 1 oder 2, das weiterhin umfasst

a) Berechnen der Gradienten (21) von jedem der Straßenvektoren;
b) Bestimmen, ob die berechneten Gradienten innerhalb vorbestimmter unterer und oberer Grenzen liegen;
c) Verändern von Höhenkoordinaten der Start- und/oder Endpunkte von jedem der Straßenvektoren, der einen Gradienten unterhalb der vorbestimmten unteren Grenze oder oberhalb der vorbestimmten oberen Grenze aufweist;

d) Berechnen der Gradienten von jedem der Straßenvektoren mit Höhenkoordinaten, die in Schritt c) verändert werden, und Bestimmen, ob die berechneten Gradienten innerhalb vorbestimmter unterer und oberer Grenzen liegen;

e) Ausführen der obigen Schritte c) bis d), bis die berechneten Gradienten von jedem der Straßenvektoren innerhalb der vorbestimmten unteren und oberen Grenzen liegen; und in dem

die Kostenfunktion durch Variieren der Höhenkoordinaten lediglich der Straßenvektoren minimiert wird, die Gradienten aufweisen, die innerhalb der vortiestimmten unteren und oberen Grenzen liegen.

4. Verfahren gemäß Anspruch 1 oder 2, das weiterhin umfasst

a) Berechnen des Gesamtgradienten einer Teilmenge der Straßenvektoren oder sämtlicher Straßenvektoren;
b) Bestimmen, ob der berechnete Gesamtgradient innerhalb vorbestimmter unterer und oberer Grenzen liegt;
c) Verändern von Höhenkoordinaten des Start- und/oder Endpunkts von zumindest einem Straßenvektor der Straßenvektoren, für die der Gesamtgradient berechnet wird, wenn der berechnete Gesamtgradient unterhalb der vorbestimmten unteren Grenze fällt oder die vorbestimmte obere Grenze überschreitet;
d) Ausführen der obigen Schritte a) bis c), bis der Gesamtgradient innerhalb der vorbestimmten unteren und oberen Grenze liegt; und in dem

die Kostenfunktion durch Variieren der Höhenkoordinaten lediglich der Straßenvektoren minimiert wird, für die der Gesamtgradienten innerhalb der vorbestimmten unteren und oberen Grenze liegt.

5. Verfahren gemäß Anspruch 3 oder 4, in dem die Höhenkoordinaten der Start- und/oder Endpunkte von jedem der Straßenvektoren, die berechnete Gradienten unterhalb der vorbestimmten unteren Grenze oder oberhalb der vorbestimmten oberen Grenze aufweisen, um einen vorbestimmten Wert erhöht oder erniedrigt werden.

6. Verfahren gemäß einem der Ansprüche 3 - 4, in dem eine Straßenklasse der Straße bestimmt wird, und in dem die untere Grenze und obere Grenze auf der Grundlage der bestimmten Straßenklasse vorbestimmt werden.

7. Verfahren gemäß Anspruch 6, in dem der Schritt des Bestimmens der Straßenklasse das Bestimmen, ob die Straße in Übereinstimmung mit einem Klothoidmodell gebaut ist, umfasst.

8. Verfahren gemäß einem der vorhergehenden Ansprüche, in dem die Kostenfunktion Kosten für Tunnel und/oder Brücken und/oder Kosten für das Erhöhen und/oder Erniedrigen einer Straßenhöhe in Hinsicht auf die Höhenkoordinaten, die für das Initialisieren der Straßenvektoren verwendet werden, umfasst.

9. Verfahren gemäß Anspruch 8, in dem die Kostenfunktion auf der Grundlage der Längen und Tiefen von Tunneln (2) und/oder der Längen und Höhen von Brücken (3) und/oder der Fläche und/oder des Volumens, definiert durch den Unterschied des Höhenprofils (1) der Straße aufgrund der bestimmten Straßenvektoren und des entsprechenden Höhenprofils des Terrain-Modells, berechnet wird.

10. Verfahren für das Herstellen einer digitalen Karte, die Straßen umfasst, die von Straßenvektoren gebildet werden, wobei das Verfahren die Schritte des Verfahrens zum Erzeugen von Straßenvektoren gemäß einem der vorhergehenden Ansprüche umfasst.

11. Computerprogrammprodukt, das ein oder mehrere computerlesbare Medien umfasst, die computerausführbare Anweisungen zum Ausführen der Schritte des Verfahrens gemäß einem der vorhergehenden Ansprüche aufweisen.

## Revendications

1. Procédé pour générer des vecteurs de rue d'une rue d'une carte numérique, comprenant les étapes consistant à :

lire les données (10) d'un modèle de terrain ;
initialiser les vecteurs de rue (11 ; 20) avec les coordonnées de hauteur incluses dans les données lues du modèle de terrain ;
calculer une fonction de coût (12 ; 23) pour les vecteurs de rue initialisés de la rue ;
réduire à un minimum la fonction de coût (13 ; 24) en modifiant les coordonnées de hauteur d'au moins un vecteur de rue ; et

déterminer les vecteurs de rue pour lesquels la fonction de coût est réduite à un minimum.

**2.** Procédé selon la revendication 1, comprenant en outre l'étape consistant à :

conserver les coordonnées de hauteur de tous les points de croisement des vecteurs de rue auxquelles les vecteurs de rue d'autres rues se croisent pendant l'étape de réduction à un minimum de la fonction de coût.

**3.** Procédé selon la revendication 1 ou 2, comprenant en outre les étapes consistant à :

a) calculer les gradients (21) de chacun des vecteurs de rue ;
b) déterminer si les gradients calculés se trouvent dans des limites inférieure et supérieure prédéterminées ;
c) modifier les coordonnées de hauteur des points de début et / ou de fin de chacun des vecteurs de rue qui ont un gradient au-dessous de la limite inférieure prédéterminée ou au-dessus de la limite supérieure prédéterminée ;
d) calculer les gradients de chacun des vecteurs de rue avec les coordonnées de hauteur qui sont modifiées à l'étape c) et déterminer si les gradients calculés se trouvent dans des limites inférieure et supérieure prédéterminées ;
e) effectuer les étapes c) à d) ci-dessus jusqu'à ce que les gradients calculés de chacun des vecteurs de rue se trouvent dans les limites inférieure et supérieure prédéterminées ; et dans lequel

la fonction de coût est réduite à un minimum en ne modifiant les coordonnées de hauteur que des vecteurs de rue qui ont des gradients qui se trouvent dans les limites inférieure et supérieure prédéterminées.

**4.** Procédé selon la revendication 1 ou 2, comprenant en outre les étapes consistant à :

a) calculer le gradient global d'un sous-ensemble des vecteurs de rue ou de tous les vecteurs de rue ;
b) déterminer si le gradient global calculé se trouve dans des limites inférieure et supérieure prédéterminées ;
c) modifier les coordonnées de hauteur des points de début et / ou de fin d'au moins un vecteur de rue parmi les vecteurs de rue pour lesquels le gradient global est calculé, si le gradient global calculé tombe au-dessous de la limite inférieure prédéterminée ou dépasse la limite supérieure prédéterminée ;
d) effectuer les étapes a) à c) ci-dessus jusqu'à ce que le gradient global se trouve dans les limites inférieure et supérieure prédéterminées ; et dans lequel

la fonction de coût est réduite à un minimum en ne modifiant les coordonnées de hauteur que des vecteurs de rue pour lesquels le gradient global se trouve dans les limites inférieure et supérieure prédéterminées.

**5.** Procédé selon la revendication 3 ou 4, dans lequel les coordonnées de hauteur des points de début et / ou de fin de chacun des vecteurs de rue dont les gradients calculés sont au-dessous de la limite inférieure prédéterminée ou au-dessus de la limite supérieure prédéterminée sont incrémentées ou décrémentées d'une valeur prédéterminée.

**6.** Procédé selon l'une des revendications 3 et 4, dans lequel une classe de rue de la rue est déterminée, et dans lequel la limite inférieure et la limite supérieure sont prédéterminées sur la base de la classe de rue déterminée.

**7.** Procédé selon la revendication 6, dans lequel l'étape de détermination de la classe de rue comprend de déterminer si la rue est construite selon un modèle clothoïde.

**8.** Procédé selon l'une des revendications précédentes, dans lequel la fonction de coût comprend des coûts pour des tunnels et / ou des ponts et / ou des coûts pour augmenter et / ou diminuer une hauteur de rue par rapport aux coordonnées de hauteur utilisées pour l'initialisation des vecteurs de rue.

**9.** Procédé selon la revendication 8, dans lequel la fonction de coût est calculée sur la base des longueurs et profondeurs de tunnels (2) et / ou des longueurs et hauteurs de ponts (3) et / ou de l'aire et / ou du volume définis par la différence entre le profil de hauteur (1) de la rue dû aux vecteurs de rue déterminés et le profil de hauteur correspondant du modèle de terrain.

**10.** Procédé pour préparer une carte numérique comprenant des rues constituées par des vecteurs de rue, le procédé comprenant les étapes du procédé pour générer des vecteurs de rue selon l'une des revendications précédentes.

11. Produit-programme informatique, comprenant un ou plusieurs supports pouvant être lus par un ordinateur comportant des instructions exécutables par un ordinateur pour effectuer les étapes du procédé selon l'une des revendications précédentes.

FIG. 1

```
┌─────────────────┐
│   read data     │~10
│ of terrain model│
└─────────────────┘
        │
        ▼
┌─────────────────┐
│   initialize    │~11
│  street vectors │
└─────────────────┘
        │
        ▼
┌─────────────────┐
│calculate cost function│~12
│  for street vectors   │
└─────────────────┘
        │
        ▼
┌─────────────────┐
│ determine street│~13
│vectors by minimizing│
│  cost function  │
└─────────────────┘
        │
        ▼
┌─────────────────┐
│insert streets comprising│~14
│determined street vectors│
│   in digital map    │
└─────────────────┘
```

FIG. 2

```
┌─────────────────┐
│initialize street vectors│~20
└─────────────────┘
        │
        ▼
┌─────────────────┐
│calculate gradients│~21
│ of street vectors │
└─────────────────┘
        │
        ▼
┌─────────────────┐
│increment/decrement│~22
│height coordinates of│
│ starting/end points │
│  of street vectors  │
└─────────────────┘
        │
        ▼
┌─────────────────┐
│ calculate costs for│~23
│  tunnels/bridges   │
└─────────────────┘
        │
        ▼
┌─────────────────┐
│ minimize costs by  │~24
│varying height coordinates│
│  of street vectors │
└─────────────────┘
```

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **JING LI ; GEORGE TAYLOR ; DAVID B. KIDNER.** Accuracy and reliability of map-matched GPS coordinates: the dependence on terrain model resolution and interpolation algodthrn. *Computers & Geosciences,* 2005, vol. 31, 241-251